# EUROPEAN PATENT APPLICATION

(11) **EP 3 037 928 A1**
(43) Date of publication of application: **29.06.2016**
(21) Application number: 14837286.5
(22) Date of filing: 06.08.2014
(51) Int. Cl.: G06F 3/041, G06F 3/044

(54) **CAPACITIVE TOUCH PANEL AND METHOD FOR MANUFACTURING SAME**

(30) Priority: 20.08.2013 JP 2013170443; 11.11.2013 JP 2013233001
(71) Applicant: Dexerials Corporation, Tokyo 141-0032 (JP)
(72) Inventor: IMAMURA, Yoshiaki, Tokyo 141-0032 (JP); ODAGIRI, Hirokazu, Tokyo 141-0032 (JP); MURAKAMI, Yukio, Tokyo 141-0032 (JP)
(74) Representative: Witte, Weller & Partner Patentanwälte mbB
(86) International application number: PCT/JP2014/070708
(87) International publication number: WO 2015/025710

(57) **Abstract**

Provided is a high-quality capacitive touch panel that prevents surface roughness of a rear surface of a resin layer from being visible. The resin layer is adapted to eliminate a level difference caused by a decorative layer formed at an outer edge of a rear surface of a transparent panel substrate. The capacitive touch panel includes a planarization resin layer 4 and a sensor section 5. The planarization resin layer 4 is formed on a region inside a level difference caused by a decorative layer 3 formed on the transparent panel substrate 2 and a rear surface of the decorative layer 3 on a rear surface of a transparent panel substrate 2 having flexibility. The sensor section 5 includes transparent electrode layers 5a and 5b formed on a rear surface of the planarization layer 4. The planarization resin layer 4 has a rear surface to which a planar surface is transferred by pressurization and that has unevenness with a maximum height of 0.1 µm or less.

## Description

### Technical Field

The invention relates to a capacitive touch panel and a method of manufacturing the same, in particular, to a capacitive touch panel that includes a decorative layer formed at an outer edge of a rear surface of a transparent panel substrate, and a method of manufacturing the same. This application claims the benefit of Japanese Priority Patent Application JP 2013-170443 filed in Japan on August 20, 2013 and Japanese Priority Patent Application JP 2013-233001 filed in Japan on November 11, 2013, the entire contents of which are incorporated herein by reference.

### Background Art

With wide spread of smart phones and tablet personal computer (PCs) that are easily operable by means of touch panels, touch panels are now faced with urgent tasks of lower profile, smaller weight, and lower costs.

Touch panels have various detection systems; examples may include a resistance film system and a surface acoustic wave system. The resistance film system involves identifying a designated position by means of two overlaid resistance films. The surface acoustic wave system involves generating an ultrasonic wave or a surface acoustic wave in a panel surface to detect a designated position. Touch panels used in smart phones and tablet PCs as mentioned above have to cope with complicated operation having a certain degree of freedom, such as tapping or dragging with a finger over a panel, a pinch-out movement of moving two fingers apart over a screen to enlarge an image, and a pinch-in operation of moving two fingers closer. A current mainstream is therefore capacitive touch panels that use transparent electrodes to form an XY matrix to allow for simultaneous detection of a plurality of designated positions.

Here, in image display panels of conventional electronic devices and other devices, and in capacitive touch panels provided on surfaces of the image display panels, various designs have been made for peripheral regions, as decorative regions, of image display regions to enhance marketability. However, a wiring pattern electrically coupled to transparent electrodes is formed in the peripheral region, which may sometimes cause unevenness corresponding to a shape of the wiring pattern on a surface of the touch panel provided to a layered structure. In this case, it may be impossible to maintain desired planarity of the touch panel, which may cause a problem of impairing marketability of the touch panel.

Moreover, in a case where a panel substrate is subjected to decoration and an optical double-faced tape is attached on the panel substrate, air bubbles or an air layer may be formed in a region inside a level difference caused by decoration. Hence, an ultraviolet-curing resin is applied so as to eliminate a level difference caused by a decorative layer on a rear surface of the panel substrate to smooth the rear surface of the panel substrate, thereby forming a smooth panel substrate without distortion (for example, refer to PTLs 1 and 2).

In the disclosed technologies of PTLs 1 and 2 mentioned above, the ultraviolet-curing resin applied so as to eliminate the level difference caused by the decorative layer on the rear surface of the panel substrate is covered with a separator film, and the separator film is pressurized toward the curing resin to smooth the rear surface of the panel substrate.

### Citation List

### Patent Literature

PTL1: Japanese Patent No. 4640626
PTL 2: Japanese Patent No. 4716235

### Summary

### Technical Problem

However, in the disclosed technologies of PTLs 1 and 2 mentioned above, the ultraviolet-curing resin is pressurized with the separator film in between, which may cause problems such as unevenness (waves) resulting from, for example, distortion of the above-described separator film and generation of new air bubbles by uplift of the film. Moreover, generated air bubbles may change with time to affect product quality and product reliability. Further, when unevenness (waves) develops on a surface of the cured ultraviolet-curing resin in an image display region in the decorative layer, the unevenness (waves), i.e. surface roughness may be visible, leading to lowering of quality of the capacitive touch panel.

The invention has been made in view of the foregoing circumstances in prior art. It is therefore an object of the invention to provide a high-quality capacitive touch panel that prevents surface roughness of a rear surface of a resin layer from being visible. The resin layer is adapted to eliminate a level difference caused by a decorative layer. The decorative layer is formed at an outer edge of a rear surface of a transparent panel substrate.

Moreover, it is an object of the invention to manufacture a high-quality capacitive touch panel by securing planarity of a rear surface of a resin layer. The resin layer is adapted to eliminate a level difference caused by a decorative layer. The decorative layer is formed at an outer edge of a rear surface of a transparent panel substrate.

Further, it is an object of the invention to manufacture, with high yield, a capacitive touch panel including a decorative layer by reducing air bubbles generated in the above-described resin layer as well as securing planarity of the rear surface of the above-described resin layer. The decorative layer is formed at the outer edge of the rear surface of the transparent panel substrate.

Other objects and advantages of the invention will be more apparent from the following description of after-mentioned example embodiments.

### Solution to Problem

The invention is made to prevent surface roughness from being visible by having, as a rear surface of a resin layer, a planar surface having unevenness with a maximum height of 0.1 µm or less. The resin layer is adapted to eliminate a level difference caused by a decorative layer. The decorative layer is formed at an outer edge of a rear surface of a transparent panel substrate.

In the invention, in order to reduce air bubbles generated in a resin layer and secure planarity of a rear surface of the resin layer, a planarization resin layer is subjected to pressurization in a state in which the planarization resin layer is bonded to a planar surface of a planar substrate such as a glass plate having high hardness. The planarization resin layer is formed on a region inside a level difference caused by a decorative layer and a rear surface of the decorative layer on a rear surface of a transparent panel substrate having flexibility.

Namely, according to the invention, there is provided a capacitive touch panel provided with a decorative layer, the decorative layer being formed at an outer edge of a rear surface of a transparent panel substrate, the capacitive touch panel including a planarization resin layer and a sensor section. The planarization resin layer is formed on a region inside a level difference caused by the decorative layer and a rear surface of the decorative layer on the rear surface of the transparent panel substrate. The transparent panel substrate has flexibility, and the decorative layer is formed on the transparent panel substrate. The sensor section includes a transparent electrode layer. The transparent electrode layer is formed on a rear surface of the planarization resin layer. The planarization resin layer has a rear surface to which a planar surface is transferred by pressurization. The rear surface has unevenness with a maximum height of 0.1 µm or less.

In the capacitive touch panel according to the invention, the sensor section may include a first transparent electrode layer, a first transparent protection film, a transparent film, and a second transparent protection film. The first transparent electrode layer may be formed on the rear surface of the planarization resin layer. The first transparent protection film may be formed on the first transparent electrode layer. The transparent film may be bonded on the first transparent electrode layer. A second transparent electrode layer may be formed on the transparent film. The second transparent protection film may be formed on the second transparent electrode layer.

Moreover, in the capacitive touch panel according to the invention, the sensor section may include a transparent electrode layer, a jumper wiring layer, and a transparent protection film. The transparent electrode layer may be formed on the rear surface of the planarization resin layer. The jumper wiring layer may include an insulating layer. The insulating layer may be formed on the transparent electrode layer. The transparent protection film may be formed on the jumper wiring layer.

Namely, according to the invention, there is provided a method of manufacturing a capacitive touch panel, the capacitive touch panel being provided with a decorative layer, the decorative layer being formed at an outer edge of a rear surface of a transparent panel substrate. The method includes forming a planarization resin layer on a region inside a level difference caused by the decorative layer and a rear surface of the decorative layer on the rear surface of the transparent panel substrate, the transparent panel substrate having flexibility, and the decorative layer being formed on the transparent panel substrate, performing pressurization on the planarization resin layer in a state in which a rear surface of the planarization resin layer and a planar surface of a planar substrate are bonded together, curing the planarization resin layer subjected to the pressurization, separating the transparent planar substrate from the cured planarization resin layer, and forming an electrode layer on the rear surface of the planarization resin layer.

In the method of manufacturing the capacitive touch panel according to the invention, for example, the planarization resin layer may be subjected to the pressurization by a roller from side of the transparent panel substrate at predetermined speed. Moreover, in the method of manufacturing the capacitive touch panel according to the invention, for example, the planarization resin layer may be formed by printing an ultraviolet-curing resin on an entire surface over the region inside the level difference caused by the decorative layer and the rear surface of the decorative layer on the rear surface of the transparent panel substrate.

Further, in the method of manufacturing the capacitive touch panel according to the invention, for example, the planar substrate may be a transparent glass plate, a polycarbonate base, or an acrylic resin base, and the planarization resin layer subjected to the pressurization may be irradiated with ultraviolet rays from side of the planar substrate to cure the ultraviolet-curing resin layer.

In the method of manufacturing the capacitive touch panel according to the invention, for example, the planar substrate may be a glass plate having a thickness of 0.5 mm to 2 mm both inclusive, and may be subjected to release treatment.

Further, in the method of manufacturing the capacitive touch panel according to the invention, for example, the planarization resin layer subjected to the pressurization may be further subjected to autoclave treatment, and thereafter the planarization resin layer may be irradiated with ultraviolet rays to be cured.

### Effects of Invention

In the invention, the rear surface of the resin layer adapted to eliminate the level difference caused by the decorative layer formed at the outer edge of the rear surface of the transparent panel substrate is a planar surface having unevenness with a maximum height of 0.1 µm or less, which makes it possible to provide a high-quality capacitive touch panel that prevents surface roughness of the rear surface of the resin layer from being visible.

In the invention, the planarization resin layer is subjected to the pressurization in a state in which the planarization resin layer and the planar surface of the planar substrate such as a glass plate having high hardness are bonded together to secure planarity of the rear surface of the resin layer. The planarization resin layer is formed on the region inside the level difference caused by the decorative layer and the rear surface of the decorative layer on the rear surface of the transparent panel substrate having flexibility. The resin layer is adapted to eliminate the level difference caused by the decorative layer formed at the outer edge of the rear surface of the transparent panel substrate. This makes it possible to manufacture a high-quality capacitive touch panel.

Moreover, in the invention, the planarization resin layer is subjected to the pressurization by the roller from the side of the transparent panel substrate at the predetermined speed to reduce air bubbles generated in the resin layer and secure planarity of the rear surface of the resin layer, which makes it possible to manufacture, with high yield, a capacitive touch panel including the decorative layer formed at the outer edge of the rear surface of the transparent panel substrate.

Further, in the invention, the planarization resin layer subjected to the pressurization is further subjected to the autoclave treatment, which makes it possible to eliminate air bubbles remaining in an image display region inside the decorative layer, thereby manufacturing a high-quality capacitive touch panel with high yield.

### Brief Description of Drawings

[FIG. 1] FIGs. 1A and 1B are diagrams of a configuration example of a capacitive touch panel according to the invention. FIG. 1A is a front view of the capacitive touch panel, and FIG. 1B is a cross-sectional view taken along an AA' line of FIG. 1A.
[FIG. 2] FIG. 2 is a flowchart of an example of a procedure of manufacturing the above-described capacitive touch panel.
[FIG. 3] FIGs. 3A and 3B are diagrams of a configuration of a top plate that constitutes the capacitive touch panel. FIG. 3A is a front view of the above-described top plate, and FIG. 3B is a cross-sectional view taken along an AA' line of FIG. 3A.
[FIG. 4] FIGs. 4A, 4B, and 4C are schematic cross-sectional views of processes of forming the top plate in a first step of the above-described manufacturing procedure.
[FIG. 5] FIGs. 5A, 5B, and 5C are schematic cross-sectional views of processes of forming the top plate in second to fifth steps of the above-described manufacturing procedure.
[FIG. 6] FIGs. 6A, 6B, 6C, 6D, and 6E are schematic views of images of amounts of air bubbles generated in level difference regions in samples (examples 1 to 4 and a comparative example) of the top plate of the capacitive touch panel manufactured according to the above-described procedure. FIGs. 6A and 6D illustrate the images of the amounts of air bubbles in the examples 1 to 4, and FIG. 6E illustrates the image of the amount of air bubbles in the comparative example.
[FIG. 7] FIGs. 7A, 7B, 7C, 7D, and 7E are diagrams of generation states in the level difference regions in the samples (the examples 1 to 4 and the comparative example) of the above-described top plate. FIGs. 7A to 7D illustrate images of the amounts of air bubbles in the examples 1 to 4, and FIG. 7E illustrates an image of the amount of air bubbles in the comparative example.
[FIG. 8] FIG. 8 is a schematic view of a result of observing a rear surface of a planarization resin layer in a conventional example of a top plate formed by pressurization of an ultraviolet-curing resin with a separator film in between.
[FIG. 9] FIG. 9 is a diagram of another configuration example of the capacitive touch panel according to the invention. FIG. 9A is a front view of the capacitive touch panel, and FIG. 9B is a cross-sectional view taken along an AA' line of FIG. 9A.
[FIG. 10] FIG. 10 is a flowchart of another example of the procedure of manufacturing the capacitive touch panel according to the invention.

### Description of Embodiments

In the following, some embodiments according to the invention are described in detail with reference to the drawings. Note that example embodiments described below are not intended to limit the contents of the invention. It should therefore be appreciated that variations may be made without departing from the scope of the invention. Note that dimensions as illustrated in the figures are schematic; in particular, dimensions in cross-sectional views are emphasized in a thickwise direction for purpose of clearer illustration of configurations.

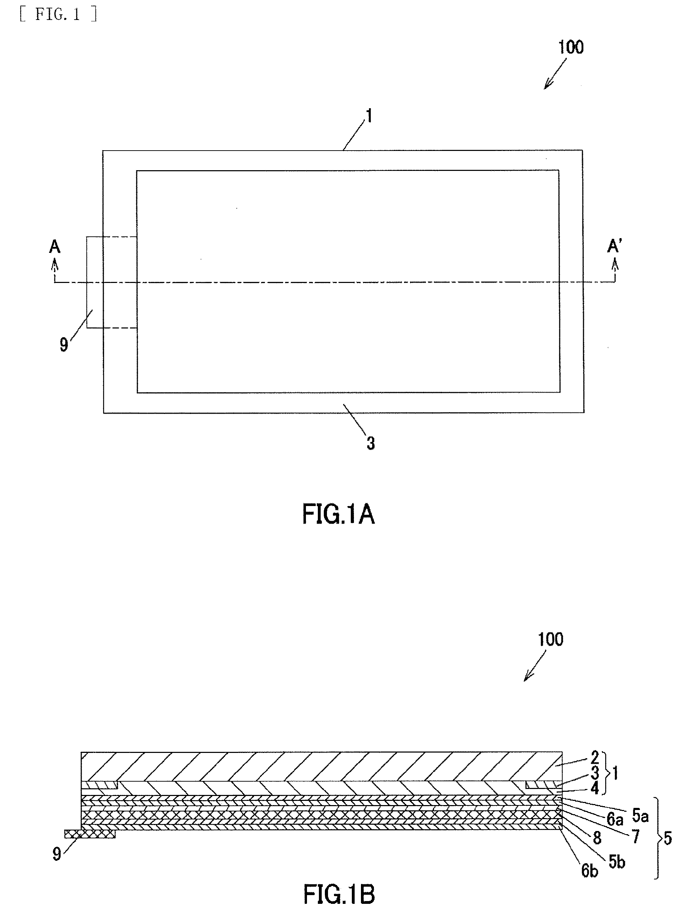

FIGs. 1A and 1B are diagrams of a configuration example of a capacitive touch panel 100 according to the invention. FIG. 1A is a front view of the capacitive touch panel 100, and FIG. 1B is a cross-sectional view taken along an AA' line of FIG. 1A.

The capacitive touch panel 100 may include a top plate 1 and a sensor section 5. The top plate 1 may include a transparent panel substrate 2, a decorative layer 3, and a planarization resin layer 4. The decorative layer 3 is formed at an outer edge of a rear surface of the transparent panel substrate 2. The planarization resin layer 4 is formed so as to cover rear-surface side of the transparent resin base 2 and rear-surface side of the decorative layer 3. The sensor section 5 is formed on a rear surface of the planarization resin layer 4 of the top plate 1. The sensor section 5 may include a first transparent electrode layer 5a, a first transparent protection film 6a, and a transparent film 8. The first transparent electrode layer 5a is formed on the rear surface of the above-described planarization resin layer 4. The first transparent protection film 6a is formed on a rear surface of the first transparent electrode layer 5a, and is adapted to protect the first transparent electrode layer 5a. The transparent film 8 is bonded on the first transparent protection film 6a with a transparent adhesive member 7 in between. A second transparent electrode layer 5b is formed on the transparent film 8. In order to protect a front surface of the second transparent electrode layer 5b, a second transparent protection film 6b is formed on the second transparent electrode layer 5b. Wirings (not illustrated) extended from the first and the second transparent electrode layers 5a and 5b may establish coupling to external circuits through a flexible printed circuit board (FPC) 9.

The planarization resin layer 4 of the top plate 1 in the capacitive touch panel 100 is a resin layer of which an ultraviolet-curing resin or any other resin is cured, and as described later, in a manufacture process, before curing the above-described resin layer, compression is performed on the resin layer in a state in which the rear surface of the planarization resin layer 4 is covered with a planar substrate having a planar surface such as a glass plate. Thus, the rear surface of the above-described planarization resin layer 4 is a planar surface to which the planar surface of the above-described planar substrate is transferred and that has unevenness with a maximum height of 0.1 µm or less.

As described, the rear surface of the planarization resin layer 4 has unevenness with a maximum height of 0.1 µm or less, which makes it possible to prevent surface roughness of the rear surface of the planarization resin layer 4 from being visible in an image display region in the decorative layer 3 and to prevent the surface roughness of the rear surface of the planarization resin layer 4 from lowering quality of the capacitive touch panel 100.

In other words, the capacitive touch panel 100 is a high-quality capacitive touch panel in which the surface roughness of the rear surface of the planarization resin layer 4 is not visible. The planarization resin layer 4 is adapted to eliminate a level difference caused by the decorative layer 3. The decorative layer 3 is formed at the outer edge of the rear surface of the top plate 1.

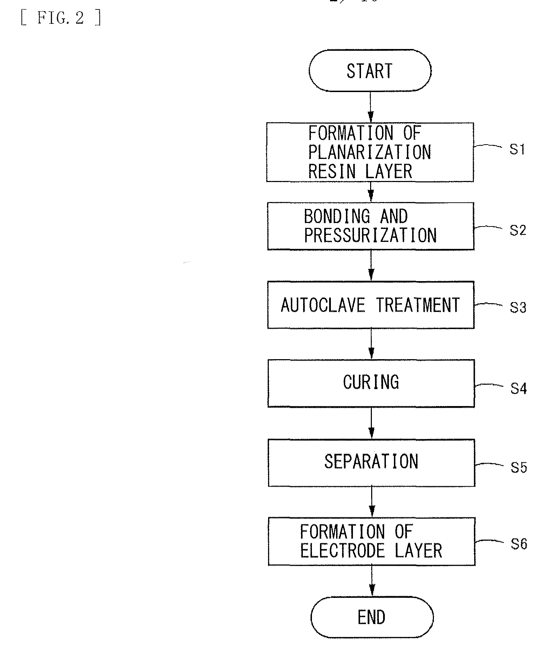

The capacitive touch panel 100 may be manufactured by, for example, processes in first to sixth steps (S1 to S6) according to a procedure illustrated in a flowchart in FIG. 2.

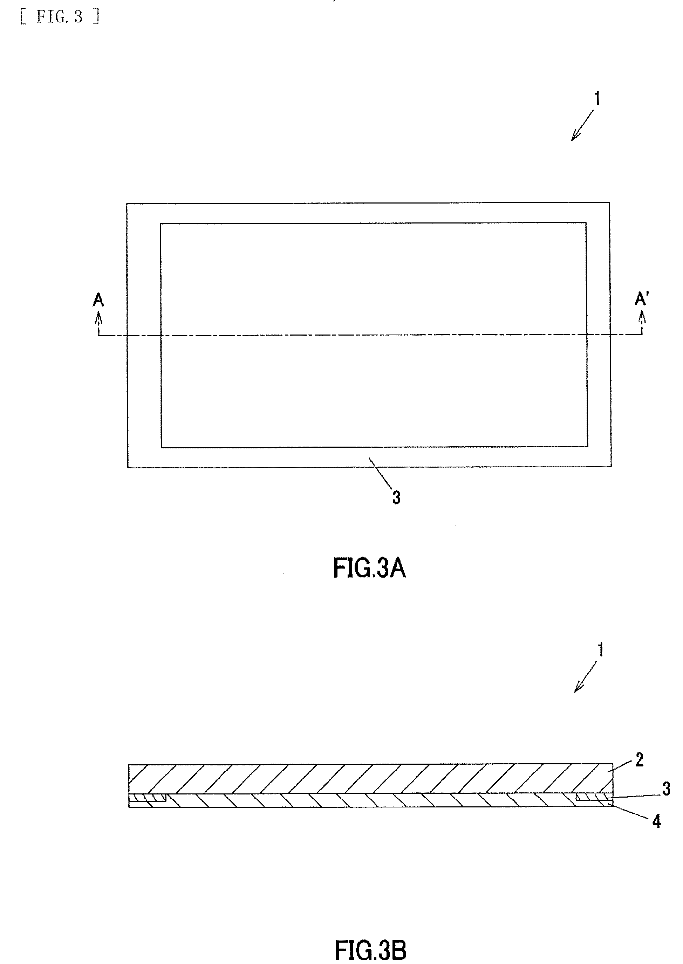

More specifically, in the first step S1, the planarization resin layer 4 may be formed on an region inside the level difference caused by the decorative layer 3 and the rear surface of the decorative layer 3 on the rear surface of the transparent panel substrate 2 having flexibility. The decorative layer 3 is formed on the transparent panel substrate 2. In the second step S2, the above-described planarization resin layer 4 may be subjected to pressurization in a state in which the rear surface of the above-described planarization resin layer 4 and a planar surface of a planar substrate 30 are bonded together. In the third step S3, the above-described planarization resin layer 4 subjected to the pressurization may be further subjected to autoclave treatment. In the fourth step S4, the above-described planarization resin layer 4 subjected to the autoclave treatment may be cured. In the fifth step S5, the above-described planar substrate 30 may be separated from the above-described cured planarization resin layer 4 to form the top plate 1 having a configuration including the transparent panel substrate 2, the decorative layer 3, and the planarization resin layer 4 mentioned above, as illustrated in FIGs. 3A and 3B. FIG. 3A illustrates a front view of the above-described top plate 1, and FIG. 3B illustrates a cross-sectional view taken along an AA' line of FIG. 3A.

Further, in the sixth step S6, the sensor section 5 including the electrode layers 5a and 5b may be formed on the rear surface of the planarization resin layer 4 of the above-described top plate 1 to complete the above-described capacitive touch panel 100.

In other words, first, in the first step S1, the planarization resin layer 4 may be formed on the region inside the level difference caused by the decorative layer 3 and the rear surface of the decorative layer 3 on the rear surface of the transparent panel substrate 2 having flexibility. The decorative layer 3 is formed on an outer periphery of the transparent panel substrate 2.

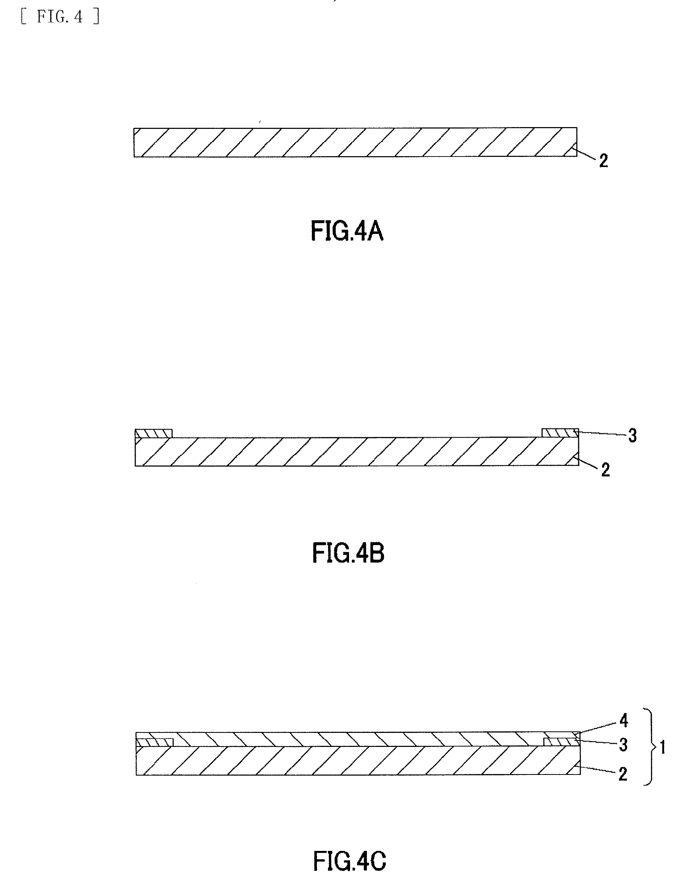

More specifically, in the first step S1, as illustrated in FIG. 4B, the decorative layer 3 is formed on the outer periphery of the rear surface of the transparent panel substrate 2 illustrated in FIG. 4A. As illustrated in FIG. 4C, an ultraviolet-curing resin is printed on an entire surface over the region inside the level difference caused by the above-described decorative layer 3 and the rear surface of the decorative layer 3 on the rear surface of the transparent panel substrate 2 to form the planarization resin layer 4 on the transparent panel substrate 2. Thus, the top plate 1 including the transparent panel substrate 2, the decorative layer 3, and the planarization resin layer 4 mentioned above is formed.

Here, the decorative layer 3 is formed at an outer edge of a liquid crystal screen that constitutes a smart phone, a tablet terminal, or other devices, and may be a layer provided for coverage of a frame region to prevent the frame region from being seen through from outside. The frame region may be a region in which electrodes, wirings, and other components necessary to allow a touch panel to function are formed. The decorative layer 3 may be formed, by, for example, silk screen printing, by re-coating of a colored ink in multiple layers. In order to obtain a coating of a predetermined thickness to prevent the electrodes, the wirings, and other components formed in the frame region from being seen through, since one-time thick coating is likely to cause unevenness, it is necessary to thin a coating layer per each coating, allowing for plural-time coating to form a multi-layered printed layer. For example, in a case with a dark-colored ink that does not allow light to easily pass through, a printed layer may be formed by two-time coating. In a case of a light-colored (such as white) ink that allows light to easily pass through, about four-time re-coating may be necessary. When a thickness per one-time coating is about 8 µm, a layer of the light-colored ink may be about 32 µm thick.

In the following second step S2, the above-described planarization resin layer 4 may be subjected to the pressurization in a state in which the rear surface of the above-described planarization resin layer 4 and the planar surface of the planar substrate 30 are bonded together.

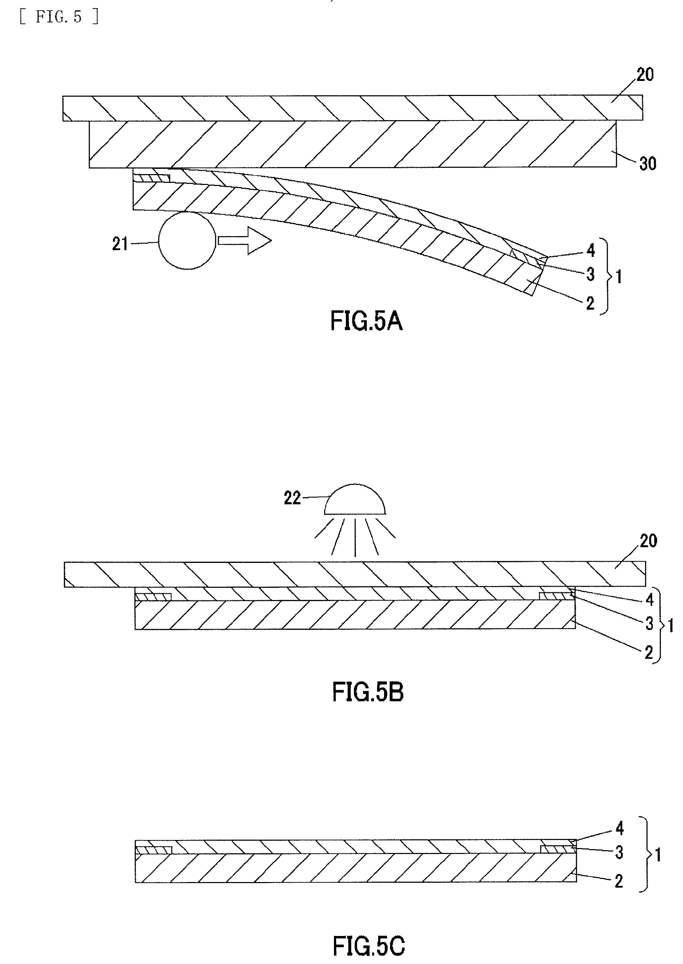

More specifically, in the second step S2, pressurization is performed on the above-described planarization resin layer 4 from side of the above-described transparent panel substrate 2 by a roller 21 with use of a bonding device. As illustrated in FIG. 5A, in the bonding device, for example, a glass plate as the planar substrate 30 is sucked to a top board 20 having a suction function, and the above-described top plate 1 is sandwiched between the above-described planar substrate 30 and the above-described a roller 21. The above-described roller 21 is rolled and moved toward an arrow direction to bond the above-described planar substrate 30 and the top plate 1 together.

As described, the above-described planarization resin layer 4 is subjected to the pressurization from side of the above-described transparent panel substrate 2 by the above-described roller 21 to bond the planar substrate 30 to the above-described planarization resin layer 4, thereby transferring the planar surface of the above-described planar substrate 30 to the rear surface of the above-described planarization resin layer 4. Thus, the rear surface of the planarization resin layer 4 may be a planar surface having surface accuracy, i.e., for example, planarity and surface roughness that are equal to those of, for example, the glass plate used as, for example, the above-described planar substrate 30.

Moreover, when the above-described planarization resin layer 4 is subjected to the pressurization from side of the above-described transparent panel substrate 2 by the above-described roller 21 to bond the planar substrate 30 to the rear surface of the above-described planarization resin layer 4, rolling and moving speed of the above-described roller 21 is set to predetermined constant speed. This makes it possible to reduce air bubbles remaining in a level difference region formed by the decorative layer 3 of the above-described top plate 1.

In the following third step S3, the above-described planarization resin layer 4 of the above-described top plate 1 subjected to the above-described pressurization may be further subjected to the autoclave treatment.

More specifically, in the third step S3, suction of the planar substrate 30 by the above-described top board 20 is stopped to separate the above-described top plate 1 together with the above-described planar substrate 30 from the above-described top board 20, and the above-described top plate 1 is put into an autoclave to be subjected to autoclave treatment.

Execution of the autoclave treatment makes it possible to further reduce air bubbles remaining in the level difference region formed by the decorative layer 3 of the above-described top plate 1 subjected to the above-described pressurization, thereby eliminating air bubbles remaining in the image display region inside the above-described decorative layer 3.

Further, in the following fourth step S4, the planarization resin layer 4 of the above-described top plate 1 subjected to the above-described autoclave treatment is cured.

More specifically, in the fourth step S4, as illustrated in FIG. 5B, the planarization resin layer 4 of the above-described top plate 1 subjected to the pressurization and the autoclave treatment mentioned above is irradiated with ultraviolet rays by an ultraviolet light source 22 from side of the above-described planar substrate 30 to be cured.

Here, use of a transparent glass plate having high ultraviolet transmittance as the above-described planar substrate 20 makes it possible to efficiently cure the above-described planarization resin layer 4 by irradiation with ultraviolet rays from side of the above-described planar substrate 30.

Note that as the above-described planar substrate 30, for example, a polycarbonate base or an acrylic resin base that is subjected to release treatment and allows ultraviolet rays to pass through may be used, instead of the above-described glass plate.

In the following fifth step S5, the above-described planar substrate 30 may be separated from the above-described cured planarization resin layer 4.

Note that the above-described planar substrate 30 may be preferably configured of a substrate member, for example, a glass plate having a thickness of 0.5 mm to 2 mm both inclusive so as to be easily separated from the cured planarization resin layer 4. The planar substrate 30 may be preferably subjected to release treatment. In the release treatment, a surface of the planar substrate 30 is coated with a water repellent or a releasing agent.

Thus, the top plate 1 with a configuration illustrated in FIGs. 3A and 3B is fabricated by processes in the above-described first to the above-described fifth steps (S1 to S5).

Further, in the following sixth step S6, the sensor section 5 including the electrode layers 5a and 5b may be formed on the rear surface of the planarization resin layer 4 of the above-described top plate 1 to complete the capacitive touch panel 100.

More specifically, as illustrated in a cross-sectional view of the completed capacitive touch panel 100 in FIG. 1, in the sixth step S6, the first transparent electrode layer 5a is formed on the rear surface of the above-described planarization resin layer 4. The first transparent protection film 6a that protects the first transparent electrode layer 5a is formed on the rear surface of the first transparent electrode layer 5a. The transparent film 8 is bonded on the first transparent protection film 6a with the transparent adhesive member 7 in between. The second transparent electrode layer 5b is formed on the transparent film 8. The second transparent protection film 6b that protects the front surface of the second transparent electrode layer 5b is formed on the above-described second transparent electrode layer 5b. Thus, the sensor section 5 is formed so as to couple the wirings (not illustrated) extended from the first and the second transparent electrode layers 5a and 5b mentioned above to external circuits through the flexible printed circuit board (FPC) 9.

In other words, the first transparent electrode layer 5a is formed on the rear surface of the above-described planarization resin layer 4. The first transparent electrode layer 5a may be formed with use of a known material. Preferred examples may include Ag or Cu nanowire, and a material that includes, for example, ITO or ZnO. The first transparent electrode layer 5a may include a plurality of wirings, and may be formed so as to cross the second transparent electrode layer 5b with an insulator in between. Thus, a capacitance generated by the first and the second transparent electrode layers 5a and 5b may be equivalently formed. By directly forming the first transparent electrode layer 5a on the front surface of the planarization resin layer 4, it is possible to eliminate a process of bonding of a transparent film on which the transparent electrode layer is formed. It is also possible to achieve lower profile by a thickness of the transparent film.

The second transparent electrode layer 5b may be formed on the transparent film 8, and may be formed of a same material as that of the first transparent electrode layer 5a. Accordingly, a preferred material of the second transparent electrode layer 5b may be Ag or Cu nanowire, or a material that includes, for example, ITO or ZnO.

The transparent film 8 is bonded on the front surface of the planarization resin layer 4 with the transparent adhesive member 7 in between. The second transparent electrode layer 5b is formed on the transparent film 8. The first transparent electrode layer 5a is formed on the planarization resin layer 4.

Note that in order to allow linear expansion coefficients of materials to be matched with one another to prevent a warp of the top plate 1, the transparent film 8 may be preferably made of a same material as that of the transparent resin base 2. In a case with use of a PC resin as the material of the transparent resin base 2, the transparent film 8 may be also preferably made of the PC resin. Note that it is sufficient to use a material having a linear expansion coefficient substantially equal to that of the PC resin. For example, cycloolefin-based resins such as COC and COP may be also used. Moreover, the transparent adhesive member 7 may be directly applied over the front surface of the planarization resin layer 4 on which the first transparent electrode layer 5a is formed. However, in order to protect the front surface of the first transparent electrode layer 5a, the transparent protection film 6a may be applied over the front surface of the first transparent electrode layer 5a, and the transparent film 8 may be bonded over a whole surface of the transparent protection film 6a thus applied, with the transparent adhesive member 7 in between. The first transparent protection film 6a may be made of a known material. For example, a thermosetting acrylic resin or an ultraviolet-curing resin coating material may be used.

Furthermore, the second transparent protection film 6b may be also applied over a front surface of the transparent film 8 on which the second transparent electrode layer 5b is formed.

The first transparent electrode layer 5a and the second transparent electrode layer 5b may be disposed with the first transparent protection film 6a, the transparent adhesive member 7, and the transparent film 8 in between. Thus, a transparent electrode X formed in the first transparent electrode layer 5a and a transparent electrode Y formed in the second transparent electrode layer 5b and crossing the transparent electrode X may form a capacitance at a crossing position.

Here, in the capacitive touch panel 100 fabricated by the above-described procedure, a remaining state of air bubbles generated in the level difference region formed by the decorative layer 3 in the planarization resin layer 4 of the top plate 1 was checked. Results shown in the following table 1 were thereby obtained.

**[Table 1]**

| | Roller Pressure/ Roller Clearance | Roller Speed (Set Value) | Autoclave Treatment Condition | Result | |
|---|---|---|---|---|---|
| Example 1 | 0.5 MPa/0.6 mm | 1 m/min | - | Few Air Bubbles | Good |
| Example 2 | 0.5 MPa/0.6 mm | 1 m/min | 0.5 MPa | Very Few Air Bubbles | Better |
| Example 3 | 0.5 MPa/0.6 mm | 1 m/min | 0.7 MPa | Very Few Air Bubbles | Better |
| Example 4 | 0.5 MPa/0.4 mm | 1 m/min | 0.7 MPa | Very Few Air Bubbles | Better |
| Comparative Example | 0.5 MPa/0.6 mm | 2 m/min | - | Many Air Bubbles | Not Acceptable |

More specifically, in the above-described first step S1, MRS58W, in a size of 297×210×0.8 mm, available from Mitsubishi Gas Chemical Company, Inc. was used for the transparent panel substrate 2. MRX-HF919 black available from Teikoku Printing Inks Mfg. Co., Ltd. was printed on an outer peripheral region of the rear surface of the transparent panel substrate 2 to form the decorative layer 3. An ultraviolet-curing resin was printed on an entire surface over the region inside the level difference caused by the above-described decorative layer 3 and the rear surface of the decorative layer 3 on the rear surface of the transparent panel substrate 2 to form the planarization resin layer 4, thereby forming the top plate 1. Test samples (a comparative example 1 and an example 1) of the top plate 1 subjected to the pressurization in the above-described second step S2 were formed, and test samples (examples 2 to 4) of the top plate 1 further subjected to the autoclave treatment in the above-described third step S3 after the pressurization in the second step S2 were formed. The remaining states of air bubbles in the test samples were checked.

In the comparative example, in the above-described second step S2, the pressurization was performed under conditions that a maximum pressure by rolling and moving of the above-described roller 21 was 0.5 MPa, a minimum clearance was 0.6 mm, and rolling and moving speed of the above-described roller 21 was 2 m/min to simultaneously form three top plates as a test sample.

In the example 1, the pressurization was performed under conditions that the maximum pressure by rolling and moving of the above-described roller 21 was 0.5 MPa, the minimum clearance was 0.6 mm, and the rolling and moving speed of the above-described roller 21 was 1 m/min that was half of the rolling and moving speed in the comparative example to simultaneously form three top plates as a test sample.

In the example 2, the pressurization was performed under conditions that the maximum pressure by rolling and moving of the above-described roller 21 was 0.5 MPa, the minimum clearance was 0.6 mm, and the rolling and moving speed of the above-described roller 21 was 1 m/min that was half of the rolling and moving speed in the comparative example, and the autoclave treatment was performed at 0.5 MPa and a temperature of 30°C for five minutes. Thus, three top plates were simultaneously formed as a test sample.

In the example 3, the pressurization was performed under conditions that the maximum pressure by rolling and moving of the above-described roller 21 was 0.5 MPa, the minimum clearance was 0.6 mm, and the rolling and moving speed of the above-described roller 21 was 1 m/min that was half of the rolling and moving speed in the comparative example, and the autoclave treatment was performed at 0.7 MPa and a temperature of 30°C for five minutes. Thus, three top plates were simultaneously formed as a test sample.

In the example 4, the pressurization was performed under conditions that the maximum pressure by rolling and moving of the above-described roller 21 was 0.5 MPa, the minimum clearance was 0.4 mm, and the rolling and moving speed of the above-described roller 21 was 1 m/min that was half of the rolling and moving speed in the comparative example, and the autoclave treatment was performed at 0.7 MPa and a temperature of 30°C for five minutes. Thus, three top plates were simultaneously formed as a test sample.

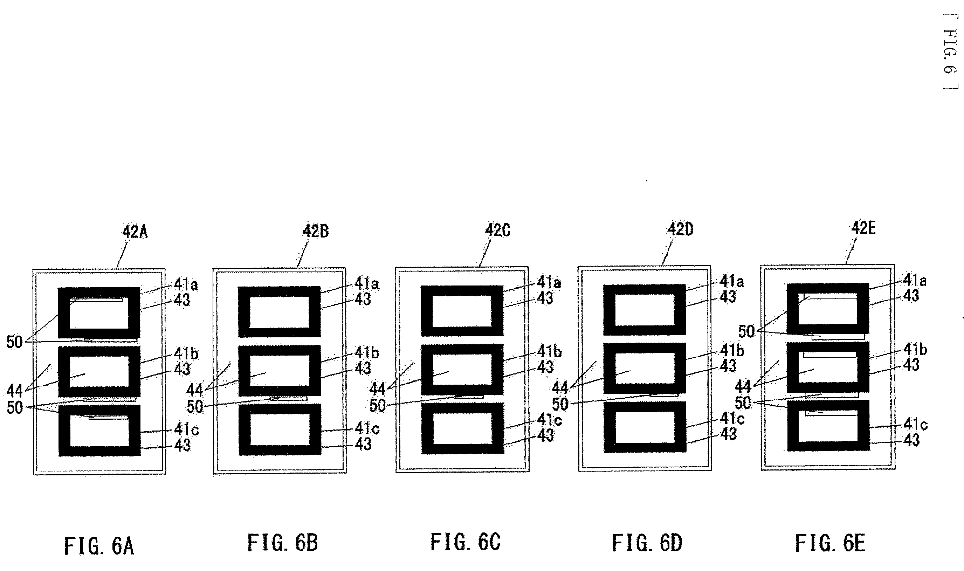

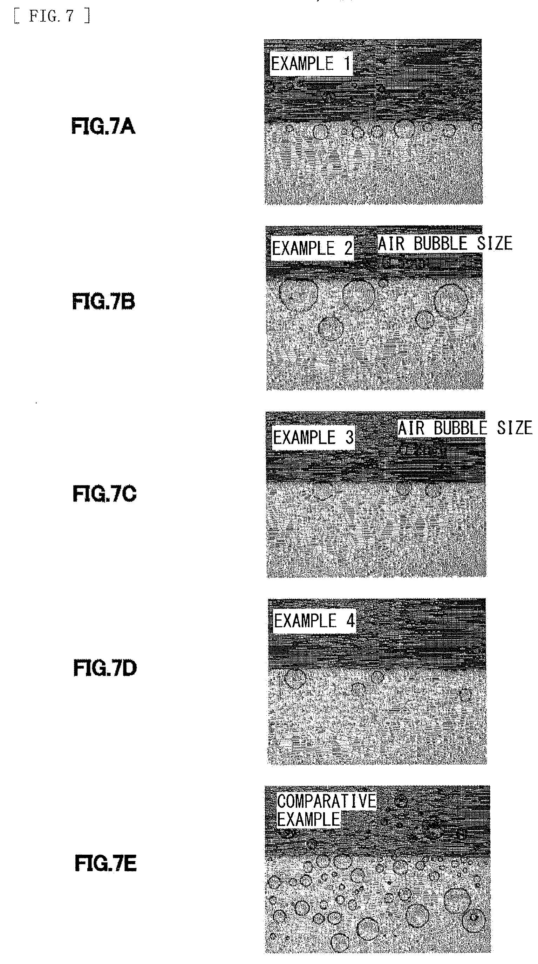

FIG. 6E illustrates an image of an amount of air bubbles generated in the level difference region formed by each of the decorative layers 43 as area of an air bubble generation region 50 in a planarization resin layer 44 of a test sample 42E of the comparative example in which three top plates 41a, 41b, and 41c were simultaneously formed. FIG. 7E illustrates an air bubble generation state of the test sample 42E of the comparative example. In the test sample 42E of the comparative example in which the pressurization was performed under the condition that the speed of the above-described roller 21 was 2 m/min, many air bubbles remained in the level difference region formed by the decorative layer 43 on upstream side of a traveling direction of the above-described roller 21.

Moreover, FIG. 6A illustrates an image of an amount of air bubbles generated in the level difference region formed by each of the decorative layers 43 in three top plates 41a, 41b, and 41c simultaneously formed as the test sample 42A of the above-described example 1, and FIG. 7A illustrates an air bubble generation state of the test sample 42A of the example 1.

In the test sample 42A of the example 1, the pressurization was performed under the condition that the speed of the above-described roller 21 was 1 m/min that was half of the speed in the test sample 42E of the above-described comparative example, which made it possible to reduce the amount of air bubbles remaining in the level difference region formed by the decorative layer 43.

As described, by slowing down the rolling and moving speed of the above-described roller 21 to take time to perform the pressurization at constant speed, it was possible to reduce the amount of air bubbles remaining in the level difference region formed by the decorative layer 43.

Moreover, FIG. 6B illustrates an image of an amount of air bubbles generated in the level difference region formed by each of the decorative layers 43 in three top plates 41a, 41b, and 41c simultaneously formed as the test sample 42B of the above-described example 2, and FIG. 7B illustrates an air bubble generation state of the test sample 42B of the example 2.

In the test sample 42B of the example 2, the pressurization was performed under the condition that the rolling and moving speed of the above-described roller 21 was 1 m/min that was half of the rolling and moving speed in the comparative example, and the autoclave treatment was further performed at 0.5 MPa, which made it possible to reduce the amount of air bubbles remaining in the level difference region formed by the decorative layer 43 more than in the test sample 42A of the above-described example 1.

As described, by further performing the autoclave treatment on the above-described planarization resin layer 44 subjected to the above-described pressurization, it was possible to further reduce the amount of air bubbles remaining in the level difference region formed by the decorative layer 43.

Moreover, FIG. 6C illustrates an image of an amount of air bubbles generated in the level difference region formed by each of the decorative layers 43 in three top plates 41a, 41b, and 41c simultaneously formed as the test sample 42C of the above-described example 3, and FIG. 7C illustrates an air bubble generation state of the test sample 42C of the example 3.

In the test sample 42C of the example 3, the pressurization was performed under the condition that the rolling and moving speed of the above-described roller 21 was 1 m/min that was half of the rolling and moving speed in the comparative example, and the autoclave treatment was further performed at 0.7 MPa, which made it possible to reduce the amount of air bubbles remaining in the level difference region formed by the decorative layer 43 more than in the test sample 42B of the above-described example 2.

As described, by performing the above-described autoclave treatment at a high pressure, it was possible to further reduce the amount of air bubbles remaining in the level difference region formed by the decorative layer 43.

FIG. 6D illustrates an image of an amount of air bubbles generated in the level difference region formed by each of the decorative layers 43 in three top plates 41a, 41b, and 41c simultaneously formed as the test sample 42D of the above-described example 4, and FIG. 7D illustrates an air bubble generation state of the test sample 42D of the example 4.

In the test sample 42D of the example 4, the pressurization was performed under the conditions that the maximum pressure by rolling and moving of the above-described roller 21 was 0.5 MPa, the minimum clearance was 0.4 mm, and the rolling and moving speed of the above-described roller 21 was 1 m/min that was half of the rolling and moving speed in the comparative example, and the autoclave treatment was further performed at 0.7 MPa, which made it possible to reduce the amount of air bubbles remaining in the level difference region formed by the decorative layer 43 to a substantially equal amount to that in the test sample 42C of the above-described example 3.

In the respective test samples 42B, 42C, and 42D of the examples 2 to 4, the above-described planarization resin layer 44 subjected to the pressurization was further subjected to the autoclave treatment as illustrated in FIGs. 6B to 6D and FIGs. 7B to 7D, which made it possible to reduce the amount of air bubbles remaining in the level difference region formed by the decorative layer 43 more than in the test sample 42A of the example 1 in which only the above-described pressurization was performed. It was also possible to eliminate air bubbles remaining in the image display region inside the above-described decorative layer 43.

In other words, the above-described planarization resin layer 44 subjected to the pressurization was further subjected to autoclave treatment, which made it possible to eliminate air bubbles remaining in the image display region inside the above-described decorative layer 43 and to manufacture the high-quality capacitive touch panel 100 with high yield.

Moreover, surface roughness of the rear surface of the planarization resin layer 4 of the top plate 1 in a capacitive touch panel manufactured according to the invention was measured with use of a surface roughness measurement instrument available from Taylor Hobson Ltd. (Form Talysurf "PGI1250A", stylus: diamond conical stylus (cone angle=90°, tip diameter=2 µm), measurement pressure: 0.75 mN). Results shown in the following Table 2 were thereby obtained.

**[Table 2]**

| | Maximum Height of Planar Section µm | Maximum Height of Uneven Section µm | | |
|---|---|---|---|---|
| | | Uneven Section 1 | Uneven Section 2 | Uneven Section 3 |
| Conventional Example | 0.712 | 7.803 | 2.796 | 7.719 |
| Example | 0.071 | No Uneven Section | | |

In Table 2, as a conventional example, a test sample of a top plate formed by pressurization of an ultraviolet-curing resin with a separator film in between was a conventional example, and the test samples 42A to 42E of the examples 1 to 4 and the comparative example mentioned above were an example.

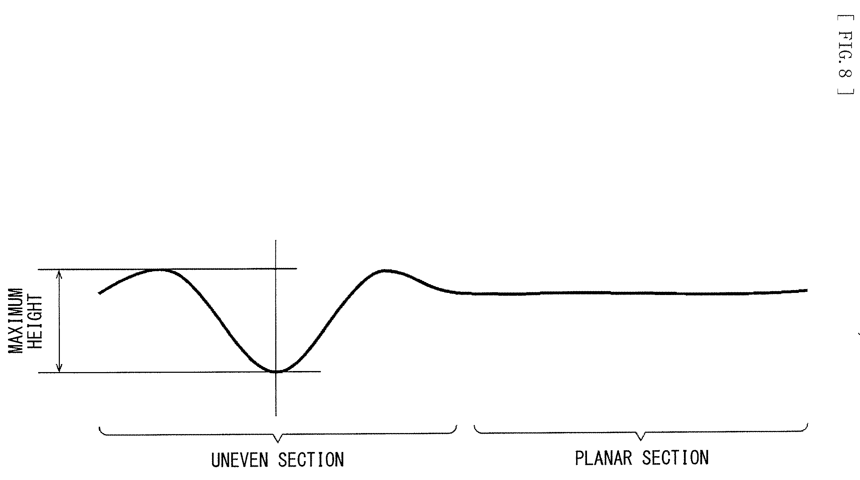

In the test sample of the conventional example, when the rear surface of the planarization resin layer was observed, as illustrated in FIG. 8, the rear surface included a planar section (a part in which unevenness was 1 µm or less and unevenness was not visible by visual observation) and an uneven section (a part in which unevenness was visible clearly by visual observation). A maximum height (a difference between a lowest position and a highest position) of the planar section was about 0.712 µm, and a maximum height (a difference between a lowest position and a highest position) of the uneven section was about 7.803 µm to about 2.796 µm.

Note that uneven sections 1, 2 and 3 in the conventional example in Table 2 were three uneven parts on a sample surface illustrated in FIG. 8.

In the test samples 42A to 42E of the example, i.e., the examples 1 to 4 and the comparative example mentioned above, no uneven part was formed, and the maximum height (a difference between a lowest position and a highest position) of the planar section was about 0.071 µm, and was decreased to about 1/10 of the maximum height of the planar section in the test sample of the conventional example.

More specifically, in the test samples 42A to 42E of the example, the above-described planarization resin layer 44 was subjected to the pressurization by the above-described roller 21 from side of the above-described transparent panel substrate 2 to bond the planar substrate 30 to the rear surface of the above-described planarization resin layer 44, thereby transferring the planar surface of the above-described planar substrate 30 to the rear surface of the planarization resin layer 44. Thus, the rear surface of the planarization resin layer 44 became a planar surface having surface accuracy, i.e., for example, planarity and surface roughness that were equal to those of, for example, the glass plate used as the above-described planar substrate 30.

As described, in the capacitive touch panel 100 manufactured by performing the processes in the above-described first to sixth steps (S1 to S6), the rear surface of the planarization resin layer 4 is a planar surface having unevenness with a maximum height of 0.1 µm or less. The surface roughness of the rear surface of the above-described planarization resin layer 4 is not therefore visible, and the surface roughness of the rear surface of the above-described planarization resin layer 4 does not lower the quality of the capacitive touch panel 100.

Note that the transparent panel substrate 2 of the above-described capacitive touch panel 100 may be preferably made of a polycarbonate (PC) resin that is a resin material having high heat resistance. In general, flaw-resistance of a touch panel surface is evaluated with pencil hardness (a scratch hardness test JIS K 5600). The PC resin as a single base has surface hardness of HB to H both inclusive, and may be easily flawed. Thus, in the transparent panel substrate 2 as described above, a transparent resin layer made of a PMMA resin or any other resin material that is a rigid resin material having high hardness is formed on one surface of a transparent resin base made of, for example, the PC resin, i.e., on front-surface side of the capacitive touch panel 100. This makes it possible to achieve a flaw-resistant touch panel. Furthermore, a top coating layer may be formed as a protection layer on a front surface of the transparent resin layer.

The transparent resin base on the front surface of which the transparent resin layer is formed may be formed with use of two kinds of resin materials, by simultaneous melt molding.

There is no particular limitation of a material of the planarization resin layer 4. The planarization resin layer 4 is formed so as to cover an entire surface over the rear surface of the transparent panel substrate 2 and the rear surface of the decorative layer 3. Transparent acrylic-based resin coating materials, urethane-based resin coating materials, and other materials used in an ultraviolet-curing ink may be used. More specifically, coating materials made of, for example, urethane (meth)acrylate, epoxy (meth)acrylate, polyester (meth)acrylate, polyester urethane (meth)acrylate, polyether (meth)acrylate, polycarbonate (meth)acrylate, and polycarbonate urethane (meth)acrylate may be used. More preferred materials used as the planarization resin layer 4 may have haze of less than 1% in order not to affect optical characteristics of the touch panel. The haze is a ratio of diffused transmitted light to total transmitted light. As described above, in a case of decorative printing with the light-colored ink, the decorative layer 3 may be about 32 µm thick. Accordingly, an acrylic-based coating material may be applied to a thickness of, for example, about 35 µm, over the rear surface of the transparent panel substrate 2 and the rear surface of the decorative layer 3 to form the planarization resin layer 4. To apply an acrylic-based coating material to form the planarization resin layer 4, direct application with use of a die coater may be possible, as well as silk screen printing. As described, for formation of the planarization resin layer 4, known application techniques may be used. Accordingly, introduction of special equipment is not necessary. Same equipment as that used for a printing process of the decorative layer 3 may be used, leading to reduction in manufacture costs. It is also possible to prevent a wiring from being disconnected because of a level difference when the first transparent electrode layer 5a is formed on the rear surface of the planarization resin layer 4.

Note that as to the level difference between the above-described decorative layer 3 and the transparent panel substrate 2, it is sufficient to secure reliability of connection of the wiring of the first transparent electrode layer 5a formed on the rear surface of the planarization resin layer 4. Accordingly, perfect planarization is not necessary. For example, the planarization resin layer 4 may be about 30 µm thick, with respect to the 32 µm-thick decorative layer 3. Alternatively, the planarization resin layer 4 after formation may have a center thickness smaller than an outer edge thickness. A uniform thickness of the entire planarization resin layer 4 is not necessary.

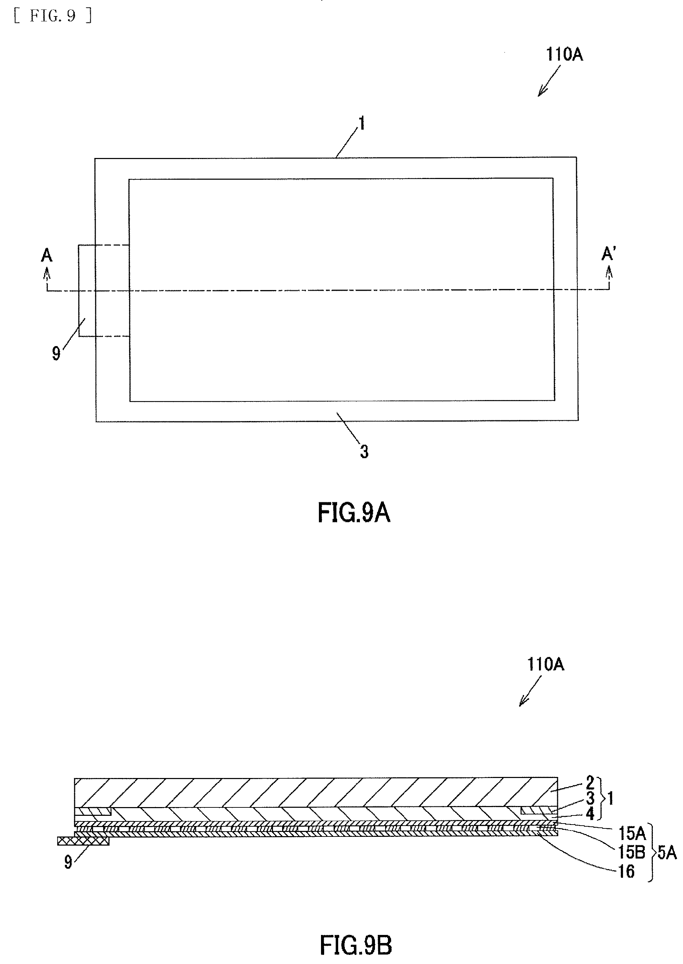

Moreover, in the example embodiment described above, in the sixth step S6, the sensor section 5 is formed that has a two-layer electrode configuration including the electrode layers 5a and 5b formed on the rear surface of the planarization resin layer 4 of the above-described top plate 1; however, the sensor section 5 formed on the rear surface of the planarization resin layer 4 of the above-described top plate 1 does not have to have the two-layer electrode configuration. For example, like a capacitive touch panel 110A illustrated in FIG. 9, a sensor section 5A having a single-layer electrode configuration including a transparent electrode layer 15A and a jumper wiring layer 15B that includes an insulating layer may be formed on the rear surface of the planarization resin layer 4 of the above-described top plate 1. In the above-described sensor section 5A, a protection film 16 may be formed on the rear surface of the jumper wiring layer 15B to protect the jumper wiring layer 15B including the insulating layer, and may be coupled to the flexible printed circuit board 9 for coupling to external circuits. For the protection film 16, a known material may be used, and the protection film 16 may be formed by coating with, for example, a thermosetting or UV-curing acrylic resin.

Here, FIGs. 9A and 9B illustrate a configuration of the capacitive touch panel 110A according to the invention. FIG. 9A illustrates a front view of the capacitive touch panel 110A, and FIG. 9B illustrates a cross-sectional view taken along an AA' line of FIG. 9A.

The planarization resin layer 4 of the top plate 1 in the capacitive touch panel 110A is a resin layer of which an ultraviolet-curing resin or any other resin is cured, and before curing the above-described resin layer, compression is performed on the resin layer in a state in which the rear surface of the planarization resin layer 4 is covered with a planar substrate having a planar surface such as a glass plate. Thus, the rear surface of the above-described planarization resin layer 4 may be a planar surface to which the planar surface of the above-described planar substrate is transferred and that has unevenness with a maximum height of 0.1 µm or less.

As described, the rear surface of the planarization resin layer 4 has unevenness with a maximum height of 0.1 µm or less, which makes it possible to prevent surface roughness of the rear surface of the above-described planarization resin layer 4 from being visible in an image display region in the above-described decorative layer 3 and to prevent the surface roughness of the rear surface of the above-described planarization resin layer 4 from lowering the quality of the capacitive touch panel 110A.

In other words, the capacitive touch panel 110A is a high-quality capacitive touch panel in which the surface roughness of the rear surface of the planarization resin layer 4 is not visible. The planarization resin layer 4 is adapted to eliminate a level difference caused by the decorative layer 3. The decorative layer 3 is formed at the outer edge of the rear surface of the top plate 1.

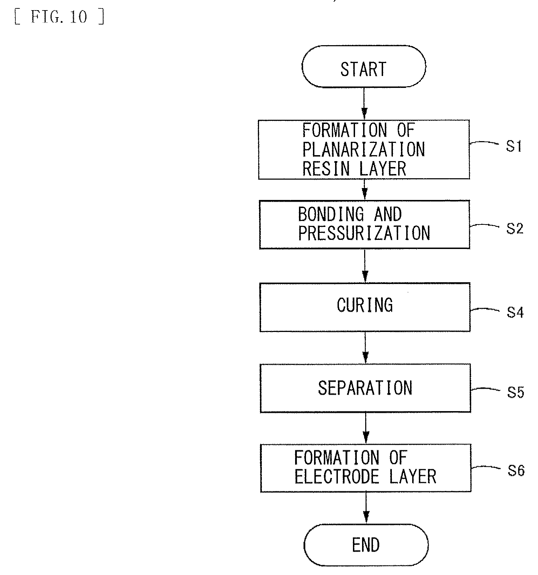

Moreover, in the example embodiment described above, the planarization resin layer 4 subjected to the pressurization in the second step S2 is further subjected to the autoclave treatment in the third step S3, and then is subjected to the curing in the fourth step S4; however, as described above, in the second step S2, by slowing down the rolling and moving speed of the roller 21 to take time to perform the pressurization at constant speed, it is possible to reduce the amount of air bubbles remaining in the level difference region formed by the decorative layer 3. Accordingly, as illustrated in a flowchart in FIG. 10, depending on necessary specifications for the planarization resin layer 4 of the capacitive touch panel to be manufactured, the autoclave treatment in the third step S3 may be eliminated, and the planarization resin layer 4 subjected to the pressurization in the second step S2 may be directly subjected to the curing in the fourth step S4.

In other words, in the fourth step S4, the suction of the planar substrate 30 by the above-described top board 20 may be stopped to separate the top plate 1 together with the planar substrate 30 from the above-described top board 20. The top plate 1 includes the planarization resin layer 4 subjected to the pressurization in the second step S2. Thereafter, the top plate 1 may be irradiated with ultraviolet rays from side of the above-described planar substrate 30 to cure the above-described planarization resin layer 4.

Note that in a procedure of manufacturing the capacitive touch panel illustrated in the flowchart in FIG. 10, respective processes of the first step S1, the second step S2, and the fourth to the sixth steps S4 to S6, except for the third step S3 are the same as those in the procedure of manufacturing the capacitive touch panel 10 illustrated in the above-described flowchart in FIG. 2. Description of the respective processes is therefore omitted.

### Reference Signs List

- 1: Top plate

- 2: Transparent panel substrate
- 3: Decorative layer
- 4: Planarization resin layer
- 5, 5A: Sensor section
- 5a: First transparent electrode layer
- 5b: Second transparent electrode layer
- 6a: First transparent protection film
- 6b: Second transparent protection film
- 7: Transparent adhesive member
- 8: Transparent film
- 9: Flexible printed circuit board
- 15A: Transparent electrode layer
- 15B: Jumper wiring layer
- 16: Protection film
- 20: Top board
- 22: Ultraviolet light source
- 30: Planar substrate
- 100, 110A: Capacitive touch panel

## Claims

1. A capacitive touch panel provided with a decorative layer, the decorative layer being formed at an outer edge of a rear surface of a transparent panel substrate, the capacitive touch panel comprising:
a planarization resin layer formed on a region inside a level difference caused by the decorative layer and a rear surface of the decorative layer on the rear surface of the transparent panel substrate, the transparent panel substrate having flexibility, and the decorative layer being formed on the transparent panel substrate; and
a sensor section including a transparent electrode layer, the transparent electrode layer being formed on a rear surface of the planarization resin layer,
wherein the planarization resin layer has a rear surface to which a planar surface is transferred by pressurization, the rear surface having unevenness with a maximum height of 0.1 µm or less.

2. The capacitive touch panel according to claim 1, wherein the sensor section includes a first transparent electrode layer, a first transparent protection film, a transparent film, and a second transparent protection film, the first transparent electrode layer being formed on the rear surface of the planarization resin layer, the first transparent protection film being formed on the first transparent electrode layer, the transparent film being bonded on the first transparent electrode layer, a second transparent electrode layer being formed on the transparent film, and the second transparent protection film being formed on the second transparent electrode layer.

3. The capacitive touch panel according to claim 1, wherein the sensor section includes a transparent electrode layer, a jumper wiring layer, and a transparent protection film, the transparent electrode layer being formed on the rear surface of the planarization resin layer, the jumper wiring layer including an insulating layer, the insulating layer being formed on the transparent electrode layer, and the transparent protection film being formed on the jumper wiring layer.

4. A method of manufacturing a capacitive touch panel, the capacitive touch panel being provided with a decorative layer, the decorative layer being formed at an outer edge of a rear surface of a transparent panel substrate, the method comprising:
forming a planarization resin layer on a region inside a level difference caused by the decorative layer and a rear surface of the decorative layer on the rear surface of the transparent panel substrate, the transparent panel substrate having flexibility, and the decorative layer being formed on the transparent panel substrate;
performing pressurization on the planarization resin layer in a state in which a rear surface of the planarization resin layer and a planar surface of a planar substrate are bonded together;
curing the planarization resin layer subjected to the pressurization;
separating the transparent planar substrate from the cured planarization resin layer; and
forming an electrode layer on the rear surface of the planarization resin layer.

5. The method of manufacturing the capacitive touch panel according to claim 4, wherein the planarization resin layer is subjected to the pressurization by a roller from side of the transparent panel substrate at predetermined speed.

6. The method of manufacturing the capacitive touch panel according to claim 5, wherein the planarization resin layer is formed by printing an ultraviolet-curing resin on an entire surface over the region inside the level difference caused by the decorative layer and the rear surface of the decorative layer on the rear surface of the transparent panel substrate.

7. The method of manufacturing the capacitive touch panel according to claim 6, wherein the planar substrate is a transparent glass plate, a polycarbonate base, or an acrylic resin base, and the planarization resin layer subjected to the pressurization is irradiated with ultraviolet rays from side of the planar substrate to cure the ultraviolet-curing resin layer.

8. The method of manufacturing the capacitive touch panel according to claim 6, wherein the planar substrate is a glass plate having a thickness of 0.5 mm to 2 mm both inclusive, and is subjected to release treatment.

9. The method of manufacturing the capacitive touch panel according to any one of claim 6 to 8, wherein the planarization resin layer subjected to the pressurization is further subjected to autoclave treatment, and thereafter the planarization resin layer is irradiated with ultraviolet rays to be cured.
